# EUROPEAN PATENT APPLICATION

(11) **EP 4 029 588 A1**
(43) Date of publication of application: **20.07.2022**
(21) Application number: 21151698.4
(22) Date of filing: 14.01.2021
(51) Int. Cl.: B01D 39/06, B01D 39/20, B01D 39/16

(54) **A FILTER MEDIA**

(71) Applicant: Ahlstrom-Munksjö Oyj, 00101 Helsinki (FI)
(72) Inventor: Lemasson, Christine, 38780 ESTRABLIN (FR); Theron, Christophe, 38290 Frontonas (FR); Simon, Larry, Newville, PA Pennsylvania 17241 (US)
(74) Representative: Laine IP Oy

(57) **Abstract**

A filter media suitable for use in filtering fluids is provided. The filter media comprises a filtration particle, said filtration particle having an Al₂O₃ content of from 15 wt% to 70 wt% and a SiO₂ content of less than 70 wt% based on the weight of the particle.

## Description

### FIELD OF THE INVENTION

The present invention relates to a filter media, more particularly, to a filter media which may be used for filtering contaminants such as heavy metals from fluids such as water.

### INTRODUCTION

Heavy metals are naturally occurring metallic elements which have a relatively high atomic weight and density compared to water. As a result of their industrial, domestic, agricultural, medical and technological uses, heavy metals have become widely distributed in the environment and as a result pose a health risk to humans. The toxicity of heavy metals is dependent on a number of factors, including the level of exposure, the identity of the metal species, and the means of exposure. The metals posing the greatest risk to public health due to their toxicity are lead, arsenic, cadmium, chromium, and mercury.

Due to their adverse effects on human health, the presence of heavy metals in drinking water is strictly controlled. For example, the maximum allowable concentration in drinking water for lead is 5 µg/L, for arsenic is 10 µg /L, for cadmium is 5 µg/L, and for mercury is 2 µg/L.

Lead is one of the most common heavy metal contaminants in drinking water. Sources of lead contamination include lead water pipes, water tanks, plumbing fixtures, and pipe fittings. Exposure to lead can cause a number of negative health effects, impacting the nervous, reproductive, and renal systems, causing high blood pressure and anaemia, and at very high concentrations, leading to death.

Heavy metal impurities are present in fluids such as water in both soluble and particulate forms. Most current fluid filtration systems are designed to retain particulates only, since they only have mechanical retention mechanisms. Removal of soluble heavy metals, however, requires the filter media to chemically or electrostatically interact with solubilised metal particles in order to retain them.

Current filtration solutions capable of retaining soluble heavy metals such as lead typically include large blocks of absorbent materials. However, the large quantity of absorbent material required in these systems can make them expensive. They also have reduced flow rates due to the large quantity of filter material through which the fluid has to pass, and generally are incapable of removing soluble heavy metals to the levels recommended by regulatory bodies, such as the National Sanitation Foundation (NSF) and the Water Quality Association (WQA). Also, current filtration systems are not capable of retaining both particulate and soluble heavy metals to within regulatory limits.

There is accordingly a need for new filter media capable of removing particulate and dissolved heavy metal contaminants such as lead from fluids such as water.

### SUMMARY OF THE INVENTION

In accordance with a first aspect of this invention, there is provided a filter media comprising a filtration particle, said filtration particle having an Al₂O₃ content of from 15 wt% to 70 wt% and a SiO₂ content of less than 70 wt% based on the weight of the particle.

The filtration particle may have an Al₂O₃ content of from 20 wt% to 45 wt%, preferably from 30 wt% to 40 wt%.

The filtration particle may have a SiO₂ content of less than 60 wt%, preferably less than 50 wt%.

The filtration particle may comprise at least 5 wt%, preferably at least 10 wt%, most preferably at least 15 wt% Na₂O.

The filtration particle may have a mass ratio of silicon to aluminium (Si/Al) of from 0.6 to 4, preferably from 0.7 to 3.5, more preferably from 0.8 to 1.5.

The filtration particle may have a mass ratio of sodium to silicon (Na/Si) of from 0.1 to 0.9, preferably 0.4 to 0.7, more preferably 0.5 to 0.6.

The filtration particle may have a mass ratio of sodium to aluminium (Na/Al) of from 0.1 to 2, preferably from 0.3 to 1.5, more preferably from 0.5 to 1.2.

The filtration particle may be a alkali-treated filtration particle.

The filtration particle may comprise pores having a diameter of from 0.1 to 1.0 nanometers, preferably from 0.3 to 0.7 nm.

The filtration particle may further comprise one or more additional components selected from titanium-containing components (such as TiO₂), phosphorus-containing components (such as P₂O₅), sulphur-containing components (such as SO₃), potassium-containing components (such as K₂O), calcium-containing components (such as CaO), iron-containing components (such as FeO, FeO₂ or Fe₂O₃), strontium-containing components (such as SrO), yttrium-containing components (such as Y₂O₃), and zirconium-containing components (such as ZrO₂). The additional components may be within a zeolite framework in this case they are not in oxide form. For example, titanosilicate zeolite is a zeolite which has a titanium-containing component within the zeolite framework.

The filter media may further comprise matrix fibres selected from one or more of cellulose fibres, polymeric fibres, glass fibres, alumina fibres and fibrillated fibres, preferably cellulose fibres and/or glass fibres.

The cellulose fibres may be present in an amount of from 5 to 100 wt%, more preferably 10-70%. For example, from 7 to 20 wt% in some embodiments or from 50 to 70 wt% in other embodiments based on total weight of matrix fibres. The cellulose fibres may be selected from one or more of softwood fibers, hardwood fibers, vegetable fibers and regenerated cellulose fibers. The cellulose fibres may preferably be regenerated cellulose fibers.

The glass fibres may be present in an amount of from 5 to 100 wt%, more preferably from 10 to 70 wt%. For example, from 7 to 20 wt% in some embodiments or from 50 to 70 wt% in other embodiments based on the total weight of matrix fibres.

The polymeric fibres may be polyester fibres and may be present in an amount of from 1 wt% to 30 wt %, preferably from 5 wt% to 30 wt% based on the total weight of the filter media. The polyester fibres may be biopolyester fibres, which may be biodegradable or even compostable according to the EN 1334 standard.

The filter media may comprise a mixture of cellulose fibres and synthetic fibres. The synthetic fibres may be oil-based (such as polyolefin) or plant-based synthetic fibres.

The matrix fibres may be at least partially coated with nanoalumina and the filtration particle may be substantially uncoated with nanoalumina.

The filter media may further comprise one or more additives selected from a resin component, preferably a polyamide-epichlorohydrin (PAE) resin, a binder, preferably comprising latex, activated carbon and/or silver particles.

The filter media may be configured for domestic fluid filtration.

The filter media may be configured for industrial fluid filtration.

The filter media may be a water filter media. The pH of the water may be from 5 to 9 and preferably from 6.5 to 8

The filter media may comply with the NSF/ANSI 53 (2019 version): Drinking Water Treatment Units - Health Effects standard.

In some embodiments, a glass free media may be needed. The filter media, in such embodiments may comprise less than 1 wt% glass fibers, preferably less than 0.1 wt.% glass fibers.

The filter media may be configured for use as a pre-filter of a second filter media. The second filter media may comprise nanoalumina-coated fibres.

In accordance with a second aspect of this invention, there is provided a method of manufacturing a filter media as defined above, the method comprising:
(a) contacting a filtration particle which has an Al₂O₃ content of from 15 wt% to 70 wt% and a SiO₂ content of less than 70 wt% based on the weight of the particle with an alkaline solution;
(b) forming a wet laid sheet from a fibrous slurry comprising the filtration particle; and
(c) drying the sheet to obtain the filter media.

The contacting step may reduce the SiO₂ content of the filtration particle, preferably to less than 70 wt%.

Step (a) and step (b) may be performed concurrently.

Step (a) may be performed before step (b).

The alkaline solution may have a pH of between 8 and 14, preferably between 9 and 11, most preferably 10.

The fibrous slurry may comprise matrix fibres and/or one or more additives as defined above.

The method may include at least partially coating the filtration particle matrix fibres with nanoalumina. The method may comprise:
(a1) contacting the matrix fibres and/or binder fibres with nanoalumina to at least partially coat the matrix fibres and/or binder fibres; and
(a2) combining the at least partially coated fibres with the filtration particle and alkaline solution to form the fibrous slurry.

In accordance with a third aspect of this invention there is provided a method of filtering a fluid, the method comprising passing the fluid through the filter media defined above.

The fluid may be water, preferably drinking water.

In accordance with a fourth aspect of this invention, there is provided a method of removing a heavy metal from a fluid, the method comprising passing the fluid through the filter media defined above.

The heavy metal may be selected from arsenic, antimony, cadmium, cobalt, copper, iron, lead and oxidised lead, mercury, nickel, palladium, selenium, silver, thallium, tin and organotin, and zinc, preferably lead. The heavy metal may be in soluble and/or particulate form.

The present invention will be better understood in light of the following examples that are given in an illustrative manner and should not be interpreted in a restrictive manner and of the accompanying figures.

### BRIEF DESCRIPTION OF THE FIGURES

In the accompanying Figures:
- Figure 1: is a graph illustrating the effect of pH during filter media formation on lead retention performance;
- Figure 2: is a graph illustrating the comparative abilities of a nanoaluminacoated glass fibre filter media ("4603") and a filter media of the present disclosure ("19P64") to filter lead from a fluid;
- Figure 3: is a graph illustrating the lead filtration abilities of two filter media prepared according to the present disclosure, with each filtration media incorporating a different aluminosilicate zeolite ("SZT" or "SZP") as filtration particles; and
- Figure 4: is a graph illustrating the lead filtration abilities of two filter media prepared according to the present disclosure, with each filtration media incorporating a different aluminosilicate zeolite ("SZT" or "Alusil") as filtration particles.

### DETAILED DESCRIPTION

As used herein and in the accompanying claims, unless the content requires otherwise, the terms below are intended to have the definitions as follows.

"Comprise" or variations such as "comprises" or "comprising" will be understood to imply the inclusion of a stated integer or group of integers but not the exclusion of any other integer or group of integers.

"Nanoalumina" refers to a composition of aluminium oxide hydroxide [AIO(OH)] and aluminium hydroxide [Al(OH)₃], which is obtained by reacting aluminium metal with an aqueous alkaline solution, such as NaOH, KOH or ammonium hydroxide.

"Fibre" is a fibrous or filamentary structure having a high aspect ratio of length to diameter.

The "mass ratio" of two components A and B with respect to each other, can be recited in the form: Component A/Component B. This refers to the ratio of (weight of Component A): (weight of Component B). Component A and Component B may be elements (such as Al, Si, Na, etc.) or chemical species (such as Al₂O₃, SiO₂, Na₂O, etc). The mass ratio can be converted to a molar ratio by dividing the masses of the components by their molecular weights.

Similarly, the "molar ratio" of two components A and B with respect to each other, can be recited in the form: Component A/Component B. This refers to the ratio of (moles of Component A): (moles of Component B). Component A and Component B may be elements (such as Al, Si, Na, etc.) or chemical species (such as Al₂O₃, SiO₂, Na₂O, etc). The molar ratio can be converted to a mass ratio by multiplying the moles of the components by their molecular weights.

The prior art seldom explains whether a reported ratio is a mass ratio of substances (e.g. the mass ratio of alumina and silica) or a molar ratio of specific elements within the substances (e.g. the molar ratio of aluminium and silicon atoms). The lack of specific explanation represents the ratio in an ambiguous and undefined manner, making it difficult for the skilled person to know the teaching of the prior art with any certainty. As used throughout the present disclosure, the mass ratio and molar ratio of two components of a filtration particle or filter media, as the case may be, will be understood in terms of the above definitions.

"Staple fibre" means a fibre which naturally possesses or has been cut or further processed to definite, relatively short, segments or individual lengths.

"Fibrous" means a material that is composed predominantly of fibre and/or staple fibre.

The terms "non-woven" or "web" refers to a collection of fibres and/or staple fibres in a web or mat which are randomly interlocked, entangled and/or bound to one another so as to form a self-supporting structural element.

"Synthetic fibre" refers to fibres made from fibre-forming substances including polymers synthesised from chemical compounds, modified or transformed natural polymer and silicious (glass) materials. Such fibres may be produced by conventional melt-spinning, solution-spinning, solvent spinning and like filament production techniques.

The present disclosure provides a filter media suitable for use in a variety of industrial and domestic fluid purification applications. The filter media is particularly suitable for removing impurities, such as heavy metals (e.g. arsenic, antimony, cadmium, cobalt, copper, iron, lead and oxidised lead, mercury, nickel, palladium, selenium, silver, thallium, tin and organotin, and zinc), dyes, oils, biological materials (e.g. bacteria, viruses, natural organic matter, cysts, and cell debris), and trace pharmaceuticals from fluids, such as water.

The filter media comprises a filtration particle which has an Al₂O₃ content of from 15 wt% to 70 wt% and a SiO₂ content of less than 70 wt% based on the weight of the particle. The filtration particle may have an Al₂O₃ content of from 20 wt% to 65 wt%, 20 wt% to 60 wt%, 20 wt% to 55 wt%, 20 wt% to 50 wt%, 20 wt% to 45 wt%, 20 wt% to 40 wt%, 25 wt% to 65 wt%, 25 wt% to 60 wt%, 25 wt% to 55 wt%, 25 wt% to 50 wt%, 25 wt% to 45 wt%, 25 wt% to 40 wt%, 30 wt% to 65 wt%, 30 wt% to 60 wt%, 30 wt% to 55 wt%, 30 wt% to 50 wt%, 30 wt% to 45 wt%, 30 wt% to 40 wt%, 35 wt% to 65 wt%, 35 wt% to 60 wt%, 35 wt% to 55 wt%, 35 wt% to 50 wt%, 35 wt% to 45 wt%, or 35 wt% to 40 wt%. The filtration particle may have a SiO₂ content of less than 70 wt%, 65 wt%, 60 wt%, 55 wt%, 50 wt%, 45 wt%, 40 wt%, or 35 wt%, preferably less than 50 wt%. The filtration particle may have a SiO₂ content of from 10 wt% to 65 wt%, 10 wt% to 60 wt%, 10 wt% to 55 wt%, 10 wt% to 50 wt%, 10 wt% to 45 wt%, 10 wt% to 40 wt%, 10 wt% to 35 wt%, 10 wt% to 30 wt%, 10 wt% to 25 wt%, 10 wt% to 20 wt%, 15 wt% to 65 wt%, 15 wt% to 60 wt%, 15 wt% to 55 wt%, 15 wt% to 50 wt%, 15 wt% to 45 wt%, 15 wt% to 40 wt%, 15 wt% to 35 wt%, 15 wt% to 30 wt%, 15 wt% to 25 wt%, 15 wt% to 20 wt%, 20 wt% to 65 wt%, 20 wt% to 60 wt%, 20 wt% to 55 wt%, 20 wt% to 50 wt%, 20 wt% to 45 wt%, 20 wt% to 40 wt%, 20 wt% to 35 wt%, 25 wt% to 65 wt%, 25 wt% to 60 wt%, 25 wt% to 55 wt%, 25 wt% to 50 wt%, 25 wt% to 45 wt%, 25 wt% to 40 wt%, 25 wt% to 35 wt%, 25 wt% to 30 wt%, 30 wt% to 65 wt%, 30 wt% to 60 wt%, 30 wt% to 55 wt%, 30 wt% to 50 wt%, 30 wt% to 45 wt%, 30 wt% to 40 wt%, 30 wt% to 35 wt%, 35 wt% to 65 wt%, 35 wt% to 60 wt%, 35 wt% to 55 wt%, 35 wt% to 50 wt%, 35 wt% to 45 wt%, 35 wt% to 40 wt%, 40 wt% to 65 wt%, 40 wt% to 60 wt%, 40 wt% to 55 wt%, 40 wt% to 50 wt%, or 40 wt% to 45 wt%. The mass ratio of silicon to aluminium (Si/Al) in the filtration particle may be from 0.7 to 4.0, 0.7 to 3.5, 0.7 to 3.0, 0.7 to 2.5, 0.7 to 2.0, 0.7 to 1.5, 0.8 to 4.0, 0.8 to 3.5, 0.8 to 3.0, 0.8 to 2.5, 0.8 to 2.0, 0.8 to 1.5, 0.9 to 4.0, 0.9 to 3.5, 0.9 to 3.0, 0.9 to 2.5, 0.9 to 2.0, or 0.9 to 1.5.

The filtration particle is capable of binding soluble heavy metal cations in fluids such as water and trapping particulate metal particles when the filtration particle is incorporated into a filter media. The combination of Al₂O₃ and SiO₂ in the above quantities has been found to enhance the performance of the filtration particle by optimising the degree of electrostatic attraction between the filtration particle and impurities (such as heavy metals) in fluids such as water during filtering. Without wishing to be bound by theory it is believed that the specific mass ratio of Si/Al in the filtration particle creates a stronger negative charge concentration within the filtration particle than particles with a higher Si content. This is because aluminium sites in the filtration particle are negatively charged while silicon sites remain neutral. By having a higher proportion of negatively charged sites, the negative charge concentration is higher, which results in a greater number of exchangeable cations such as Na⁺ ions, within the particle and an improved ability to bind positively charged soluble heavy metal cations, such as lead cations.

The filtration particle may comprise at least 5 wt%, 10 wt%, 15 wt% or 20 wt%, preferably at least 15 wt% Na₂O. The filtration particle may comprise between 5 and 40 wt% Na₂O, preferably between 10 and 30 wt% Na₂O, more preferably between 15 and 25 wt% Na₂O. The mass ratio of Na/Si in the filtration particle may be from 0.1 to 0.9, from 0.2 to 0.8, from 0.3 to 0.8, from 0.4 to 0.7, or from 0.5 to 0.6. The filtration particle may have a mass ratio of sodium to aluminium (Na/AI) of from 0.1 to 2.0, from 0.2 to 1.5, from 0.3 to 1.5, from 0.4 to 1.5, from 0.5 to 1.2, more preferably from 0.6 to 0.9. These ratios provide an indication of the proportion of exchangeable Na⁺ cations in the filtration particle.

The filtration particle may be a alkali-treated filtration particle. The base may be selected from one or more of NaOH, KOH, Ba(OH)₂, Ca(OH)₂, LiOH, and NH₄OH. The filtration particle may be treated with an alkaline solution at a pH of from 8 to 14, preferably from 9 to 11, or more preferably at about pH 10. The alkaline solution may alter at least an outer surface of the filtration particle, for example, by altering the Si, Al, or Na content of the filtration particle. In some embodiments, the alkaline solution may reduce the Si content of an outer surface of the filtration particle.

The filtration particle may further comprise one or more additional components selected from titanium-containing components (such as TiO₂), phosphorus-containing components (such as P₂O₅), sulphur-containing components (such as SO₃), potassium-containing components (such as K₂O), calcium-containing components (such as CaO), iron-containing components (such as FeO, FeO₂ or Fe₂O₃), strontium-containing components (such as SrO), yttrium-containing components (such as Y₂O₃), and zirconium-containing components (such as ZrO₂). The additional components may be within a zeolite framework in this case they are not in oxide form. For example, titanosilicate zeolite is a zeolite which has a titanium-containing component within the zeolite framework.

The filter media may comprise pores through which fluids can pass during filtering. The pores may have a diameter of from 0.5 to 10 µm, from 0.6 to 5 µm, or from 0.7 to 4 µm. The pores may have an average pore size of from 0.8 to 3 µm, preferably, from 1.2 to 2.0 µm.

The filtration particle may have pores or channels within which exchangeable cations may be located. In some embodiments, the pores or channels may have a diameter of from 0.1 to 1.0 nanometers, preferably 0.3 to 0.7 nanometers. The pores may act as a molecular sieve to selectively screen molecules or atoms according to size and exchangeable cations. The pores may have a negative internal polarity and a high cation exchange affinity for dissolved heavy metals, such as arsenic, antimony, cadmium, cobalt, copper, iron, lead and oxidised lead, mercury, nickel, palladium, selenium, silver, thallium, tin and organotin, or zinc.

The filtration particle may have a surface area determined by Brunauer-Emmett-Teller (BET) method from 300 to 900 m²/g, preferably from 400 to 700 m²/g and most preferably around 600 m²/g. This may provide sufficient surface for ionic exchange and may improve the efficiency of the filtration particle for retaining heavy metals.

The filtration particle may have a cation exchange capacity (CEC) of at least 2 meq/g preferably 3 meg/g for heavy metals cations especially lead cations when measured at a pH between 6-8.

The filtration particle may have isotherms at both pH 5 and pH 8.5 (+/-0.5) that match so as to have a Point of Zero Charge (PZC or Iso-electric point) that is outside the pH range of 5 to 8.5.

In some embodiments, the filtration particle may be a powdered aluminosilicate (such as a zeolite). In some embodiments, the filtration particle may be an aluminosilicate fibre (e.g. a ceramic fibre). In some embodiments, the filtration particle may be an aluminosilicate glass fibre. In some embodiments, the filtration particle may be an E-glass (alumino-borosilicate glass with less than 1% w/w alkali oxides) fibre. The E-glass filtration particle may have an alumina content of greater than 10 wt%, or from 10 to 20 wt%, preferably from 13-16 wt%.

Similar to other naming conventions for polyatomic species in organic chemistry, the constituents of a zeolite's composition may be represented in their monomeric form as their common oxide. However, it is recognized that this is a convention intended to simplify and standardize analysis and communication. For example, a aluminosilicate framework is a polyatomic skeletal structure containing repeat units [-SiO₄-]⁴⁻ and [-AlO₄-]⁵⁻ in large proportions.

When describing the constituents of a zeolite, the base species are considered individually, so rather than describing the base unit in the form of a coordination tetrahedra, the base unit of the zeolite framework is represented in the form of a common mineral oxide. In other words, proportions of elemental species may be represented by the common form of that base unit's oxide, such as SiO₂ or Al2O3.

The filtration particle may have an average diameter of from 0.1 to 50 µm. Where the filtration particle is in the form of a powder particle, the average diameter may be from 1 to 30 µm, and where the filtration particle is in the form of a fibre, the average diameter may be from 1 to 5 µm.

The filter media may further comprise matrix fibres for structural support. The matrix fibres may be present in an amount of from 10 to 90 wt%, preferably from 20 to 80 wt%, preferably from 30 to 80 wt% based on the total weight of the filter media. In some embodiments, the matrix fibres may be present in an amount of from 30 to 50 wt%, preferably from 35 to 45 wt%, based on the total weight of the filter media. In some embodiments, the matrix fibres may be present in an amount of from 50 to 70 wt%, preferably from 55 to 65 wt%, based on the total weight of the filter media. The matrix fibres may be selected from one or more of cellulose fibres, synthetic fibres, polymeric fibres, glass fibres, alumina fibres and fibrillated fibres. The cellulose fibres may be present in an amount of from 5 to 100 wt%, more preferably from 7 to 20 wt% or more preferably from 50 to 70 wt% based on total weight of matrix fibres. The cellulose fibres may be selected from one or more of softwood fibres, hardwood fibres, vegetable fibres and reconstituted cellulose fibres (such as lyocell or Rayon fibres), and may preferably be regenerated cellulose fibers.

The glass fibres may be present in an amount of from 5 to 100 wt%, more preferably from 10 to 70 wt%, more preferably from 7 to 20 wt%, or more preferably from 50 to 70 wt% based on the total weight of matrix fibres.

The filter media can comprise at least 80 wt%, preferably at least 90 wt%, or more preferably at least 95 wt% synthetic matrix fibres based on total weight of matrix fibres. The synthetic matrix fibres may be oil-based or plant-based synthetic fibres and may be selected from one or more of synthetic polymeric fibres, modified or transformed natural polymeric fibres, or silicious (glass) fibres. Exemplary fibres include polyesters (e.g. polyalkylene terephthalates such as polyethylene terephthalate (PET), polybutylene terephthalate (PBT) and the like), polyalkylenes (e.g. polyethylenes, polypropylenes and the like), polyacrylonitriles (PAN), and polyamides (nylons, e.g. nylon-6, nylon 6,6, nylon-6,1 2, and the like).

The polymeric fibres may be polyester fibres and may be present in an amount of from 1 wt% to 30 wt %, preferably from 5 wt% to 30 wt%, based on the total weight of matrix fibres. The polyester fibres may be biopolyester fibres, which may be biodegradable or even compostable according to EN 1334 standard.

According to another alternative, the matrix fibres can comprise a mixture of cellulose fibres and synthetic fibres. The synthetic fibres can be present in the filter media in an amount of up to 50 wt%, preferably between 10 wt% and 30 wt% of the total weight of matrix fibres in the filter media.

To enhance bonding between the filtration particles and matrix fibres, the filter media may include binder fibres, such as the Trevira^{®} T256 PET microfibres manufactured by Trevira^{®}.Binder fibres comprise a thermoplastic portion that can soften or melt during processing of the filter media, for example during a calendering step. Binder fibres can be monocomponent or bicomponent. The bicomponent thermoplastic fibres may comprise a polymer core fibre surrounded by a meltable sheath of thermoplastic polymer which has a lower melting point than the core.

The filter media may include a polymeric binder, such as styrene acrylic, acrylic, polyethylene vinyl chloride, styrene butadiene rubber, polystyrene acrylate, polyacrylates, polyvinyl chloride, polynitriles, polyvinyl acetate, polyvinyl alcohol derivates, starch polymers, phenolics and combinations thereof, including both waterborne and solvent versions. In some cases, the polymeric binder may be in the form of a latex, such as a water-based latex emulsion.

The filter media may further include one or more additive components. The additive component may be selected from: activated carbon (which may be suitable for chlorine removal and improving water taste and odour), a wet strength resin, such as a polyamide-epichlorohydrin (PAE) resin (e.g. Kymene^{®} GHP resin), which may be added to enhance the wet strength of the filter media; an acrylic co-polymer (e.g. Lubrizol^{®} Hycar^{®} 26450), which may be added to enhance general cohesion of the components of the filter media; a dyeing agent, which may be required to give the filter media a favourable appearance; fibre retention agents; separation aids (e.g. silicone additives and associated catalysers); a hydrophilic or hydrophobic agent; a wetting agent; an antistatic agent; or an antimicrobial agent, such as silver particles. If present, these additives may be included in amounts of greater than 0 wt%, 0.01 wt%, 0.1 wt%, 1 wt%, 5 wt%, 10 wt% and/or less than about 40 wt%, 35 wt%, 30 wt%, 25 wt%, 20 wt%, 15 wt%, 10 wt%, 9 wt%, 8 wt%, 7 wt%, 6 wt%, 5 wt%, 4 wt%, 3 wt%, 2 wt%, 1 wt%, or any combination thereof, including for example between 0.01 wt% and 1 wt%, based on the total weight of the filter media.

In some embodiments, the filter media may be at least partially coated with nanoalumina. The matrix fibres and/or binder fibres may be at least partially coated, preferably substantially fully coated, with nanoalumina, and the filtration particle may be substantially uncoated with nanoalumina. In some embodiments, the filtration particle may be at least partially coated with nanoalumina.

The nanoalumina may be present in the filter media in an amount of from 1 to 70 wt%, preferably from 10 to 50 wt%, from 15 to 40 wt%, or from 25 to 35 wt% based on the total weight of the filter media.

In use, the nanoalumina coating may become positively charged when submerged in water, such as when water is passed through the filter media. The pH of the water may be from 5 to 9 and preferably from 6.5 to 8. The positive charge may serve to attract and entrap negatively charged impurities in the water electrostatically, thereby permitting the water to be purified by the filter media.

The filtration particle can be blended with the matrix fibres, binder fibres, polymeric binder, and/or additive component to produce a non-woven filter media.

In some embodiments, the filter media may comprise less than 1 wt% glass fibers, preferably less than 0.1 wt% glass fibers.

The filter media may be configured for use as a pre-filter. The pre-filter may be connectable to a filtration system containing a second filter media. In some embodiments, the second filter media may comprise nanoalumina-coated fibres. In use, the pre-filter may be positioned upstream of the filtration system and may be arranged to complement the second filter media by filtering out impurities of a different nature. For example, the pre-filter may be arranged to remove positively charged impurities such as heavy metal cations from a fluid before the fluid enters the filtration system containing the second filter media, and the second filter media may be configured to remove negatively charged contaminants such as particulate matter, organic acids, viruses, bacteria, cysts, cell debris or trace pharmaceuticals. The porosity of the filter media in the pre-filter may be sufficiently large to have a negligible impact of the flow rate through the second filter media. This arrangement can be more cost effective than incorporating a full second layer of the filter media into the filtration system in order to remove heavy metal impurities from fluids to be filtered.

The filter media used as a pre-filter or as standalone filter media may be protected or supported by additional layers which have limited impact on the porosity of the filter media.

The disclosure extends to a method of manufacturing a filter media as defined herein, the method comprising:
(a) contacting a filtration particle which has an Al₂O₃ content of from 15 wt% to 70 wt% and a SiO₂ content of less than 70 wt% based on the weight of the particle with an alkaline solution;
(b) forming a wet laid sheet from a fibrous slurry comprising the filtration particle; and
(c) drying the sheet to obtain the filter media.

The Al₂O₃ content of the filtration particle in step (a) may be from 20 wt% to 65 wt%, 20 wt% to 60 wt%, 20 wt% to 55 wt%, 20 wt% to 50 wt%, 20 wt% to 45 wt%, 20 wt% to 40 wt%, 25 wt% to 65 wt%, 25 wt% to 60 wt%, 25 wt% to 55 wt%, 25 wt% to 50 wt%, 25 wt% to 45 wt%, 25 wt% to 40 wt%, 30 wt% to 65 wt%, 30 wt% to 60 wt%, 30 wt% to 55 wt%, 30 wt% to 50 wt%, 30 wt% to 45 wt%, 30 wt% to 40 wt%, 35 wt% to 65 wt%, 35 wt% to 60 wt%, 35 wt% to 55 wt%, 35 wt% to 50 wt%, 35 wt% to 45 wt%, or 35 wt% to 40 wt%, and the SiO₂ content may be less than 65 wt%, 60 wt%, 55 wt%, 50 wt%, 45 wt%, 40 wt%, or 35 wt%, preferably less than 50 wt%, or from 10 wt% to 65 wt%, 10 wt% to 60 wt%, 10 wt% to 55 wt%, 10 wt% to 50 wt%, 10 wt% to 45 wt%, 10 wt% to 40 wt%, 10 wt% to 35 wt%, 10 wt% to 30 wt%, 10 wt% to 25 wt%, 10 wt% to 20 wt%, 15 wt% to 65 wt%, 15 wt% to 60 wt%, 15 wt% to 55 wt%, 15 wt% to 50 wt%, 15 wt% to 45 wt%, 15 wt% to 40 wt%, 15 wt% to 35 wt%, 15 wt% to 30 wt%, 15 wt% to 25 wt%, 15 wt% to 20 wt%, 20 wt% to 65 wt%, 20 wt% to 60 wt%, 20 wt% to 55 wt%, 20 wt% to 50 wt%, 20 wt% to 45 wt%, 20 wt% to 40 wt%, 20 wt% to 35 wt%, 25 wt% to 65 wt%, 25 wt% to 60 wt%, 25 wt% to 55 wt%, 25 wt% to 50 wt%, 25 wt% to 45 wt%, 25 wt% to 40 wt%, 25 wt% to 35 wt%, 25 wt% to 30 wt%, 30 wt% to 65 wt%, 30 wt% to 60 wt%, 30 wt% to 55 wt%, 30 wt% to 50 wt%, 30 wt% to 45 wt%, 30 wt% to 40 wt%, 30 wt% to 35 wt%, 35 wt% to 65 wt%, 35 wt% to 60 wt%, 35 wt% to 55 wt%, 35 wt% to 50 wt%, 35 wt% to 45 wt%, 35 wt% to 40 wt%, 40 wt% to 65 wt%, 40 wt% to 60 wt%, 40 wt% to 55 wt%, 40 wt% to 50 wt%, or 40 wt% to 45 wt%.

Step (a) and step (b) may be performed concurrently. Alternatively, step (a) may be performed before step (b).

The alkaline solution may have a pH of between 8 and 14, preferably between 9 and 11, or preferably about 10.

The fibrous slurry may comprise matrix fibres, binder fibres, a polymeric binder, and/or an additive component. The method may include a step of blending the filtration particle with the matrix fibres, binder fibres, a polymeric binder, and/or an additive component to form the fibrous slurry. The fibrous slurry may further comprise the alkaline solution. In some embodiments, the filtration particle may be separated from the alkaline solution prior to forming the fibrous slurry.

The filter media produced according to the method may be a non-woven filter media.

By contacting the filtration particle with the alkaline solution, the quantity of neutrally charged SiO₂ in the filtration particle may be reduced primarily through solubilisation of the SiO₂, whereas the quantity of negatively charged Al₂O₃ may remain largely unaffected. This may have the effect of increasing the negative charge density on the filtration particle and consequently increasing the capacity of the filtration particle to retain positively charged heavy metal ions, such as lead ions. The treated filtration particles can be incorporated into a filter media to provide an extended and higher degree of soluble metal ion retention than could be achieved using an equivalent quantity of untreated filtration particle material. Furthermore, a filter media that includes the treated filtration particles may be capable of removing heavy metals from a fluid such as water to within regulatory limits.

The method may include a step of at least partially coating the matrix fibres and/or binder fibres with nanoalumina. The coating may be applied to the matrix fibres and/or binder fibres before combining the coated fibres with the filtration particle to form the fibrous slurry. Accordingly, the method may further comprise:
(a1) contacting the matrix fibres and/or binder fibres with nanoalumina to at least partially coat the matrix fibres and/or binder fibres; and
(a2) combining the at least partially coated fibres with the filtration particle and alkaline solution to form the fibrous slurry.

The nanoalumina may be formed in situ by reacting aluminium metal (typically in the form of a powder or flakes) in an alkaline solution (such as an aqueous solution of NaOH, KOH, or ammonium hydroxide) at a pH of from 8 to 14, preferably from pH 9 to pH 11, more preferably about pH 10, with heating (from 60 to 80 °C, preferably at about 70 °C). After completion of the reaction, the pH of the solution may optionally be adjusted (e.g. reduced or neutralised).

Once the dried filter media has been formed, it may be corrugated, cut, folded, pleated and assembled into the filtration product that will ultimately be used.

The present disclosure extends to a method of filtering a fluid, the method comprising passing the fluid through the filter media defined above. The fluid may be water, preferably drinking water. The fluid may be urged through the filter media by application of an externally applied pressure, or by hydrostatic pressure. During filtration, impurities in the fluid bind to the filter media (e.g. by electrostatic adhesion to the filtration particle and/or nanoalumina coating) and/or are trapped by physical occlusion, resulting in purified fluid exiting the filter media.

The present disclosure further extends to a method of removing a heavy metal from a fluid, the method comprising passing the fluid through the filter media defined above. The fluid may be water, preferably drinking water. The heavy metal may be selected from arsenic, antimony, cadmium, cobalt, copper, iron, lead and oxidised lead, mercury, nickel, palladium, selenium, silver, thallium, tin and organotin, and zinc, and is preferably lead or preferably arsenic. The heavy metal may be in a soluble form, a particulate form, or both a soluble and particulate form.

The filter media may be suitable for use in filtering fluids in industrial applications, for example, removing contaminants from municipal drinking or waste water, treating industrial waste water containing chemical or pharmaceutical contaminants, ameliorating mine waste water, or treating water contaminated by oil and gas drilling or processing operations.

The filter media may also be suitable for use in filtering fluids in domestic applications, such as purifying water for drinking or cooking purposes.

The filter media may be incorporated into an apparatus for filtering a fluid, such as water. The apparatus may comprise a dispensing unit for dispensing the fluid, and a filtration unit for filtering fluid dispensed by the dispensing unit. The filtration unit may comprise a filter media as defined above.

### EXAMPLES

### Example 1

The NSF/ANSI-53 industry standard describes a protocol for testing the efficacy of a water filter for filtering lead in two different types of water. The first is a low alkalinity water having a pH of 6.5 and 10-30 mg/L CaCO₃. The second is a more mineralized water having a pH of 8.5 and 100 mg/L CaCO₃. Both solutions contain 150 µg/L of Pb, of which 30±10% is particulate lead.

One prior art filter media, as described in US 2019/0218111 A1, uses a three-layer structure for lead removal. The first and the third layers are cellulosic fibrous material between which iron-coated ceramic granules are arranged. Although this product is capable of retaining soluble lead, it is saturated rapidly and is not suitable for extended use. The results of the NSF/ANSI-53 (2019 version) test performed on this filter media are illustrated below in Table 1.

**Table 1: Test data indicating lead reduction at pH 6.5**

| Volume of the water filtered ( Litres) | Input Water Lead µg/L | A WRTCL/ 14082/18-19 Unit - 1 sample | A WRTCL/ 14083/18-19 Unit - 2 sample | FLOW RATE ml/min Filtration of 500 ml ÷ Time taken for filtration | |
|---|---|---|---|---|---|
| | | Output Water Lead µg/L | Output Water Lead µg/L | Unit-1 | Unit-2 |
| Initial 500ml (19.04.2018) | 157.51 | 5.81 | 7.31 | 66 | 62 |
| 2 Liters (19.04.2018) | 151.52 | 11.85 | 11.35 | 66 | 62 |
| 4 Liters (19.04.2018) | 149.17 | 8.31 | 12.59 | 60 | 58 |
| 7.5 Liters (20.04.2018) | 150.25 | 28.94 | 32.13 | 54 | 50 |
| 11.5 Liters (20.04.2018) | 148.09 | 58.41 | 58.16 | 50 | 45 |
| 15 Liters (20.04.2018) | 157.95 | 58.89 | 56.84 | 45 | 40 |
| Average | 152.41 | | | | |
| Average conc. Allowed | 135-165 µg/L | | | | |
| NSF/ANSI53 Recommendation | 120-180 µg/L Single point tolerance | Maximum allowable product water concentration of Lead : 5 µg/L | | | |

As the above data illustrate, the levels of lead in the output water exceed the NSF level of 5 µg/L throughout the test.

### Example 2 - Effect of pH on lead retention

### Preparation of the filter media

The filter media was prepared according to the components indicated in Table 2 below. The amounts are based on dry basis wt%.

**Table 2: Components and quantities used to prepare the tested filter media**

| **Component** | **Wt%** |
|---|---|
| Aluminosilicate zeolite filtration particle (Surfatas SZT) | 28.7% |
| Fibre 1: Lyocell L-040-6 (fibrillated fibres) | 8.2% |
| Fibre 2: Trevira T256 (Synthetic PET fibres) | 16.4% |
| Fibre 3: Lauscha B-06-F (glass fibres) | 24.6% |
| Fibre 4 : Lauscha B-04-F (glass fibres) | 12.3% |
| Kymene 557H (wet stream additive) | 3.5% |
| Lubrizol (Hycar) 26450 Latex (for general cohesion) | 6.3% |

### Preparation of the filter media and testing

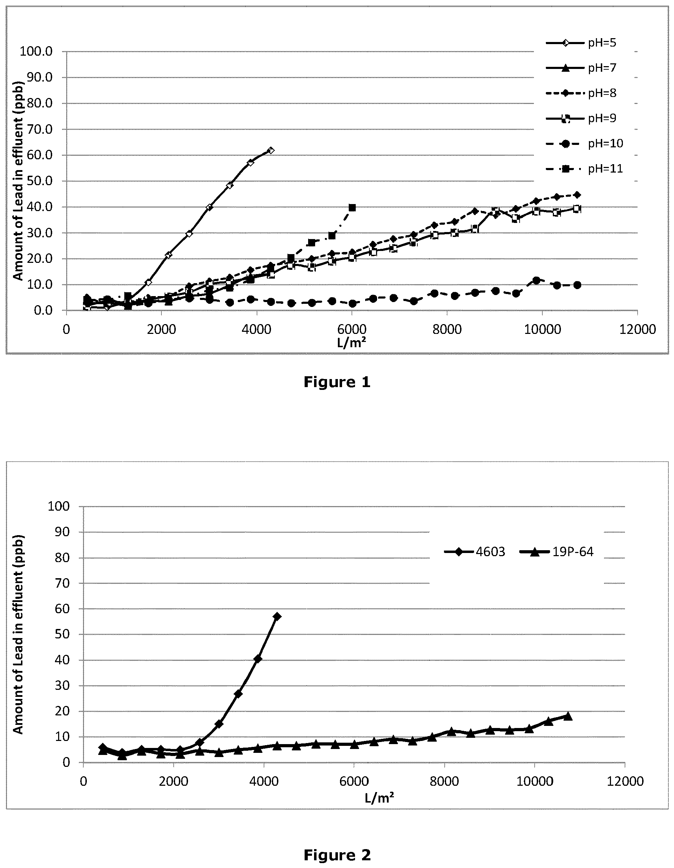

Six filter media were prepared by a wet-laying process at pH 5, 7, 8, 9, 10 and 11, respectively. Lead retention performance for each the filter media was tested using a solution containing 150 ppb of soluble lead. The lead-containing solution was passed through the filter media and the amount of lead ions in the effluent was measured. After this initial screening of the filter media it was concluded that the filter media prepared at pH 10 presented the highest performance. The results are illustrated in Figure 1.

### Example 3

Using the data of Example 2, a filter media was prepared at industrial scale according to the components and their quantities indicated in Table 3 below.

**Table 3: Components and quantities used in tested filter media**

| **Component** | **Wt%** |
|---|---|
| Aluminosilicate zeolite filtration particle (Surfatas SZT) | 30.9% |
| Fibre 1: Lyocell L-040-6 (fibrillated fibres) | 8.9% |
| Fibre 2: Trevira T256 (Synthetic PET fibres) | 17.8% |
| Fibre 3: Lauscha B-06-F (glass fibres) | 26.6% |
| Fibre 4 : Lauscha C-04-F (glass fibres) | 12.4% |
| Kymene 557H (1% wet stream additive) | 0.5% |
| Lubrizol (Hycar) 26450 Latex (10% for general cohesion) | 2.9% |

The components were added sequentially to a pulper as follows:
- 50% of the Lauscha B-06-F was added and dispersed for 5 minutes at 850-950 rpm. The rest of Lauscha was added and dispersed for 5 minutes at 850-950 rpm.
- Lauscha C-04-F was added and dispersed for 5 minutes at 850-950 rpm.
- Lyocell L-040-6, Trevira T256 and filtration particle (Surfatas SZT powder) were added and dispersed for 5 minutes at 850-950 rpm.
- A sodium hydroxide solution was added until pH 10 was reached.
- Kymene 557H was added and dispersed for 1 minute.
- Lubrizol (Hycar) 26450 Latex was added and dispersed for 1 minute.

### Preparation of the filter media and testing

Using this solution, a filter media was prepared by a wet-laying process. The filter media had the following characteristics:

**Table 4: Physical properties of prepared filter media**

| **Physical Properties** | **Unit** | |
|---|---|---|
| Basis Weight | g/m² | 223.5 |
| Basis Weight | lbs/1389ft² | 63.7 |
| Thickness | µm | 796.6 |
| Thickness | mils | 31.4 |
| Ash | % | 62.4 |
| MFP (Mean Flow Pore Size) | µm | 1.9 |
| Gravity Flow | s/500mL | 93 |
| Dry MD Tensile | lbs/in | 16 |
| Wet MD Tensile | lbs/in | 11.7 |

The filter media was tested for compliance with NSF/ANSI-53. The results are provided in Table 5 below.

**Table 5: Test data showing lead filtration by filter media at pH 6.5**

| Volume of water Litres | Influent water Lead µ/L | Effluent water Lead µ/L Filter #1 | Effluent water Lead µ/L Filter # 2 | Flow Rate ml/min 500 ml/Time taken for filtration | |
|---|---|---|---|---|---|
| | | | | Filter#1 | Filter#2 |
| 500ml | 149.13 | <5.0 | <5.0 | 60 | 60 |
| 2L | 151.54 | <5.0 | <5.0 | 60 | 60 |
| 4L | 163.78 | <5.0 | <5.0 | 50 | 45 |
| 6L | 165.65 | <5.0 | <5.0 | 42 | 40 |
| 8L | 150.58 | <5.0 | <5.0 | 37 | 35 |
| 10L | 150.77 | <5.0 | <5.0 | 30 | 25 |
| NSF/ANSI recomm -endation | 135-165µ/L | Maximum allowable product water concentration 5.0 µ/L | | | Status: Pass |

The results indicate that the filter media of the present disclosure was capable of reducing soluble and particulate lead in the effluent stream to less than 5.0 µg/L, in accordance with the maximum allowable level stipulated in the NSF/ANSI-53 standard.

### Example 4

The filter media from Example 3 (labelled "19P64") was arranged as a pre-filter upstream of a fibrous nanoalumina-coated media filter ("4603") and was tested for compliance with NSF/ANSI-53. The nanoalumina-coated filter media comprised glass fibres coated with nanoalumina. The results are provided in Table 6 below and show that both particulate and soluble lead levels were maintained below the maximum allowable level stipulated in the NSF/ANSI-53 standard over the course of the experiment.

**Table 6: Results of lead retention experiment using prepared filter media**

| | | 19P64/4603 | | | |
|---|---|---|---|---|---|
| | | Soluble Lead | | Particulate Lead | |
| Vfiltered(L) | L/m2 | [Pb] ppb | Flow rate ml/mn | [Pb] ppb | Flow rate ml/mn |
| 0.5 | 288 | <5.0 | 62 | <5.0 | 61 |
| 1.5 | 865 | <5.0 | 58 | <5.0 | 61 |
| 2.5 | 1441 | <5.0 | 50 | <5.0 | 61 |
| 4 | 2306 | <5.0 | 53 | <5.0 | 59 |
| 5 | 2882 | <5.0 | 45 | <5.0 | 59 |
| 6 | 3458 | <5.0 | 45 | <5.0 | 59 |
| 7.5 | 4323 | <5.0 | 45 | <5.0 | 59 |
| 9 | 5187 | <5.0 | 45 | <5.0 | 59 |
| 10 | 5764 | <5.0 | 40 | <5.0 | 59 |

In order to demonstrate that the lead removal efficacy resulted from the pre-filter and not the fibrous nanoalumina filter media, the lead removal performance of each filter media was tested independently using a solution containing 150 ppb of soluble lead according to the NSF/ANSI-53 protocol. The results are illustrated in Figure 2 which shows that the nanoalumina filter media ("4603") quickly became saturated whereas the filter media of Example 2 ("19P64") filtered and retained lead consistently over the whole course of the experiment.

### Example 5

A nanoalumina-coated filter media was prepared according to the components and quantities indicated in Table 7 below.

**Table 7: Components and quantities used in tested filter media**

| **Component** | **Wt%** |
|---|---|
| Aluminosilicate zeolite filtration particle (Surfatas SZT) | 30.9% |
| Fibre 1: Lyocell L-040-6 (fibrillated fibres) | 4.8% |
| .Fibre 2: Trevira T256 (Synthetic PET fibres) | 9.7% |
| Fibre 3: Lauscha B-06-F (glass fibres) | 14.5% |
| Fibre 4 : Lauscha C-04-F (glass fibres) | 6.8% |
| Nanoalumina | 30.0% |
| Kymene 557H (1% wet stream additive) | 0.5 |
| Lubrizol (Hycar) 26450 Latex (10% for general cohesion) | 2.9 |

After the addition of the fibre components and nanoalumina reagents (aluminium powder and NaOH solution) to a pulper, the mixture was heated at 71°C for about 15-20 minutes under stirring. The heating was stopped and the stirring maintained for 20 minutes in order to complete the nanoalumina formation reaction (hydrolysis of aluminium powder in a solution of NaOH). The nanoalumina coated fibres were combined with the filtration particle and additives and a filter media was prepared by a wet-laying process. The filter media was tested for compliance with NSF/ANSI-53. The results are provided in Table 8 below.

**Table 8: Results of lead retention experiment using prepared nanoalumina-coated filter media**

| | | 19P77 | | | |
|---|---|---|---|---|---|
| | | Soluble Lead | | Particulate Lead | |
| Vfiltered(L) | L/m2 | [Pb] ppb | Flow rate ml/mn | [Pb] ppb | Flow rate ml/mn |
| 0.5 | 288 | <5.0 | 61 | <5.0 | 61 |
| 1.5 | 865 | <5.0 | 61 | <5.0 | 61 |
| 2.5 | 1441 | <5.0 | 55 | <5.0 | 55 |
| 4 | 2306 | <5.0 | 50 | <5.0 | 50 |
| 5 | 2882 | <5.0 | 42 | <5.0 | 50 |
| 6 | 3458 | <5.0 | 36 | <5.0 | 50 |
| 7.5 | 4323 | <5.0 | 25 | <5.0 | 50 |
| 9 | 5187 | <5.0 | 25 | <5.0 | 50 |
| 10 | 5764 | <5.0 | 23 | <5.0 | 50 |

### Example 6

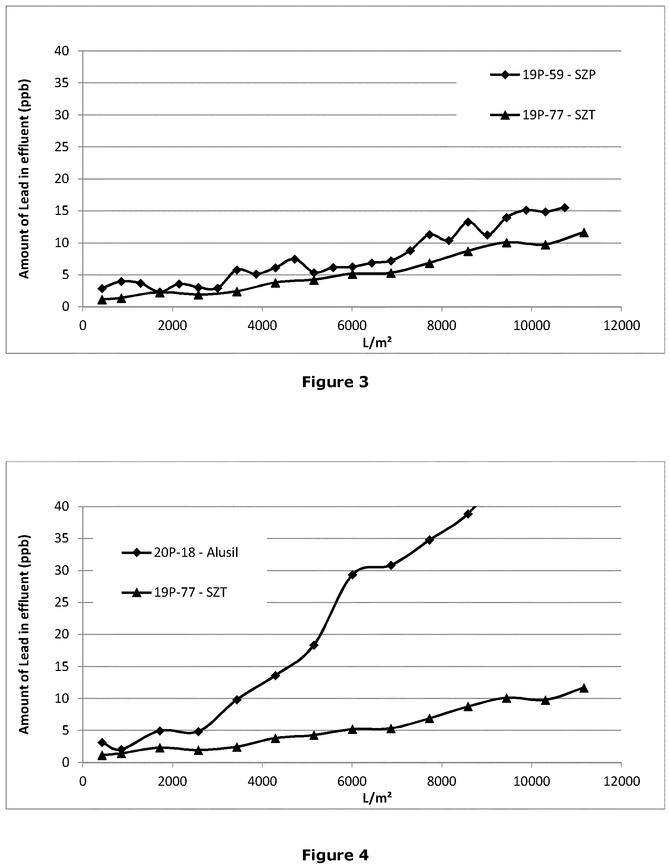

Filter media were prepared using a variety of aluminosilicate zeolites to determine whether treatment with alkaline solution enhanced their ability to retain lead impurities in water. The filter media were prepared according to the protocol described in Example 3. The results are illustrated in Figures 3 and 4.

The results illustrate that both the SZT and SZP aluminosilicate zeolites exhibited high levels of lead retention after treatment with the alkaline solution, whereas Alusil became saturated after about 3600 mL and showed poor retention of lead thereafter. Bauxaline and Zeochem did not demonstrate any appreciable lead removal and pH modification was not attempted. The chemical compositions of the tested zeolites are provided in Table 9 below.

**Table 9: Chemical compositions of tested zeolites (values in wt%)**

| | **SZT** | **SZP** | **Alusil** | **Zeochem** | **Bauxaline** |
|---|---|---|---|---|---|
| **Na₂O** | 19.068 | 22.591 | 6.642 | 2.723 | 1.991 |
| **MgO** | 1.791 | | 2.577 | 13.125 | 2.519 |
| **Al₂O₃** | 32.720 | 35.989 | 19.730 | 76.051 | 12.246 |
| **SiO₂** | 37.593 | 41.272 | 67.251 | 3.428 | 6.881 |
| **P₂O₅** | 0.012 | | | 2.980 | 8.152 |
| **SO₃** | 0.038 | | | 0.182 | 9.038 |
| **K₂O** | 0.014 | | 0.341 | 1.458 | 0.245 |
| **CaO** | 0.022 | | 3.377 | 0.005 | 0.401 |
| **TiO₂** | 8.716 | 0.132 | 0.022 | 0.006 | 0.097 |
| **Fe₂O₃** | 0.026 | 0.017 | 0.034 | 0.015 | 58.078 |
| **SrO** | | | 0.026 | 0.027 | 0.019 |
| **Y₂O₃** | | | | | 0.021 |
| **ZrO₂** | | | | | 0.288 |
| **PbO** | | | | | 0.023 |

The present invention can be further understood with reference to the following paragraphs:
1. A filter media comprising a filtration particle, said filtration particle having an Al₂O₃ content of from 15 wt% to 70 wt% and a SiO₂ content of less than 70 wt% based on the weight of the particle.
2. The filter media of paragraph 1, wherein the filtration particle has an Al₂O₃ content of from 20 wt% to 45 wt%, preferably from 30 wt% to 40 wt%.
3. The filter media of paragraph 1 or paragraph 2, wherein the filtration particle has a SiO₂ content of less than 60 wt%, preferably less than 50 wt%.
4. The filter media of any one of paragraph 1 to 3, wherein the filtration particle comprises at least 5 wt%, preferably at least 10 wt%, most preferably at least 15 wt% Na₂O.
5. The filter media of any one of paragraph 1 to 4, wherein the filtration particle has a mass ratio of silicon to aluminium (Si/Al) of from 0.6 to 4,preferably from 0.7 to 3.5, more preferably from 0.8 to 1.5.
6. The filter media of any one of paragraph 1 to 5, wherein the filtration particle has a mass ratio of sodium to silicon (Na/Si) of from 0.1 to 0.9, preferably 0.4 to 0.7, more preferably 0.5 to 0.6.
7. The filter media of any one of paragraph 1 to 6, wherein the filtration particle has a mass ratio of sodium to aluminium (Na/Al) of from 0.1 to 2.0, preferably from 0.3 to 1.5, more preferably from 0.5 to 1.2.
8. The filter media of any preceding paragraph, wherein the filtration particle is a alkali-treated filtration particle.
9. The filter media of any preceding paragraph, further comprising matrix fibres, preferably selected from one or more of cellulose fibres, polymeric fibres, glass fibres, alumina fibres and fibrillated fibres.
10. The filter media of any preceding paragraph, wherein the filtration particle has an Al₂O₃ content of from 20 wt% to 45 wt%, preferably from 30 wt% to 40 wt% and a SiO₂ content of less than 60 wt%, preferably less than 50 wt%, based on the weight of the particle, wherein the filtration particle comprises at least 10 wt%, most preferably at least 15 wt% Na₂O, wherein the filtration particle has a mass ratio of silicon to aluminium (Si/Al) of from 0.6 to 4, preferably from 0.7 to 3.5, more preferably from 0.8 to 1.5.
11. The filter media of paragraph 8, wherein the filtration particle has an Al₂O₃ content of from 20 wt% to 45 wt%, preferably from 30 wt% to 40 wt% and a SiO₂ content of less than 60 wt%, preferably less than 50 wt%, based on the weight of the particle, wherein the filtration particle comprises at least 10 wt%, most preferably at least 15 wt% Na₂O, wherein the filtration particle has a mass ratio of silicon to aluminium (Si/Al) of from 0.6 to 4, preferably from 0.7 to 3.5, more preferably from 0.8 to 1.5, and wherein the filtration particle is a alkali-treated filtration particle.
12. The filter media of paragraph 9, wherein the matrix fibres are at least partially coated with nanoalumina.
13. The filter media of any preceding paragraph, wherein the filter media is configured for use as a pre-filter of a second filter media.
14. The filter media of paragraph 12, wherein the filtration particle has an Al₂O₃ content of from 20 wt% to 45 wt%, preferably from 30 wt% to 40 wt% and a SiO₂ content of less than 60 wt%, preferably less than 50 wt%, based on the weight of the particle, wherein the filtration particle comprises at least 10 wt%, most preferably at least 15 wt% Na₂O, wherein the filtration particle has a mass ratio of silicon to aluminium (Si/Al) of from 0.6 to 4, preferably from 0.7 to 3.5 more preferably from 0.8 to 1.5, wherein the filtration particle is a alkali-treated filtration particle, wherein the filter media comprises matrix fibres selected from glass fibres and cellulose fibres, and wherein the glass fibres and/or cellulose fibres are at least partially coated with nanoalumina.
15. The filter media of paragraph 14, which is configured for use as a pre-filter of a second filter media
16. The filter media of paragraph 9 or 12, wherein the filtration particle has an Al₂O₃ content of from 20 wt% to 45 wt%, preferably from 30 wt% to 40 wt%, and a SiO₂ content of less than 60 wt%, preferably less than 50 wt%, and wherein the matrix fibres are at least partially coated with nanoalumina.
17. A method of manufacturing a filter media of any one of paragraph 1 to 16, the method comprising
   (a) contacting a filtration particle which has an Al₂O₃ content of from 15 wt% to 70 wt% and a SiO₂ content of less than 70 wt% based on the weight of the particle with an alkaline solution;
   (b) forming a wet laid sheet from a fibrous slurry comprising the filtration particle; and
   (c) drying the sheet to obtain the filter media.
18. The method of paragraph 17, wherein the fibrous slurry comprises matrix fibres, binder fibres, a polymeric binder, and/or an additive component.
19. The method of paragraph 17 or 18, wherein step (a) and step (b) are performed concurrently.
20. The method of paragraph 17 or 18, wherein step (a) is performed before step (b).
21. The method of any one of paragraphs 18 to 20, further comprising at least partially coating the matrix fibres and/or binder fibres with nanoalumina.
22. The method of paragraph 17 or 20, comprising:
   (a) contacting a filtration particle which has an Al₂O₃ content of from 15 wt% to 70 wt% and a SiO₂ content of less than 70 wt% based on the weight of the particle with an alkaline solution;
   (b) forming a wet laid sheet from a fibrous slurry comprising the filtration particle;
   and (c) drying the sheet to obtain the filter media; wherein step (a) is performed before step (b).
23. The method of paragraph 18 or 21, further comprising:
   (a1) contacting the matrix fibres and/or binder fibres with nanoalumina to at least partially coat the matrix fibres and/or binder fibres; and
   (a2) combining the at least partially coated fibres with the filtration particle and alkaline solution to form the fibrous slurry.
24. A method of removing a heavy metal from a fluid, the method comprising passing the fluid through the filter media of any one of paragraphs 1 to 16.
25. The method of paragraph 24, wherein the heavy metal is lead and the fluid is water.

## Claims

1. A filter media comprising a filtration particle, said filtration particle having an Al₂O₃ content of from 15 wt% to 70 wt% and a SiO₂ content of less than 70 wt% based on the weight of the particle.

2. The filter media of claim 1, wherein the filtration particle has an Al₂O₃ content of from 20 wt% to 45 wt%, preferably from 30 wt% to 40 wt%.

3. The filter media of claim 1 or claim 2, wherein the filtration particle has a SiO₂ content of less than 60 wt%, preferably less than 50 wt%.

4. The filter media of any one of claims 1 to 3, wherein the filtration particle comprises at least 5 wt%, preferably at least 10 wt%, most preferably at least 15 wt% Na₂O.

5. The filter media of any one of claims 1 to 4, wherein the filtration particle has a mass ratio of silicon to aluminium (Si/Al) of from 0.6 to 4, preferably from 0.7 to 3.5, more preferably from 0.8 to 1.5.

6. The filter media of any one of claims 1 to 5, wherein the filtration particle is a alkali-treated filtration particle.

7. The filter media of any one of claims 1 to 6, which further comprises matrix fibres, preferably selected from one or more of cellulose fibres, polymeric fibres, glass fibres, alumina fibres and fibrillated fibres.

8. The filter media of claim 7, wherein the matrix fibres are at least partially coated with nanoalumina.

9. The filter media of any preceding claim, which is configured for use as a pre-filter of a second filter media.

10. A method of manufacturing a filter media of any one of claims 1 to 9, the method comprising
(a) contacting a filtration particle which has an Al₂O₃ content of from 15 wt% to 70 wt% and a SiO₂ content of less than 70 wt% based on the weight of the particle with an alkaline solution;
(b) forming a wet laid sheet from a fibrous slurry comprising the filtration particle; and
(c) drying the sheet to obtain the filter media.

11. The method of claim 10, wherein the fibrous slurry comprises matrix fibres and/or binder fibres.

12. The method of claim 10 or 11, wherein step (a) and step (b) are performed concurrently.

13. The method of claim 10 or 11, wherein step (a) is performed before step (b).

14. The method of any one of claims 11 to 13, further comprising:
(a1) contacting the matrix fibres and/or binder fibres with nanoalumina to at least partially coat the matrix fibres and/or binder fibres; and
(a2) combining the at least partially coated fibres with the filtration particle and alkaline solution to form the fibrous slurry.

15. A method of removing a heavy metal from a fluid, the method comprising passing the fluid through the filter media of any one of claims 1 to 9.
